# EUROPEAN PATENT APPLICATION

(11) **EP 3 567 241 A1**
(43) Date of publication of application: **13.11.2019**
(21) Application number: 19173411.0
(22) Date of filing: 09.05.2019
(51) Int. Cl.: F02M 15/04, B27B 17/00, F02M 31/04, F02B 63/02

(54) **HANDHELD ENGINE-DRIVEN WORKING MACHINE**

(30) Priority: 11.05.2018 JP 2018092382
(71) Applicant: Yamabiko Corporation, Ohme-shi, Tokyo 198-8760 (JP)
(72) Inventor: KAWAMURA, Kunimune, Ohme, Tokyo 198-8760 (JP)
(74) Representative: Grünecker Patent- und Rechtsanwälte PartG mbB

(57) **Abstract**

A handheld engine-driven working machine has an AC power supply, a supplying device which supplies fuel and/or air to an engine, a first path and a second path which are connected to the AC power supply in series and connected to each other in parallel, a handle heater for a handle located in the first path, a device heater for the supplying device located in the second path, and a controller located in the second path. The controller includes a temperature switch for the supplying device and a half-wave blocking element connected to the device heater in series. The temperature switch blocks the second path when a temperature of the temperature switch is higher than a predetermined temperature.

## Description

### FIELD OF THE INVENTION

The present invention relates to a handheld engine-driven working machine, more specifically, to a handheld engine-driven working machine in which heaters are provided in a handle and a supplying device which supplies fuel and/or air to an engine.

### BACKGROUND OF THE INVENTION

A handheld engine-driven working machine, such as a chain saw, a bush cutter, and a hedge trimmer, has been known. Further, for operating the engine-driven working machine in a low temperature environment, a handheld engine-driven working machine which has heaters in a handle and a carburetor has been known. The heater for the handle (handle heater) is provided for warming hands of an operator. The heater for the carburetor (carburetor heater) is provided for warming the carburetor so as to stabilize an operation of the engine-driven working machine. Concretely, when the temperature of the carburetor is low, an efficiency of carburetion of atomized fuel may be degraded or moisture in intake air may be frozen, and thus, it is necessary to warm the carburetor. However, when the temperature of the carburetor becomes too high, bubbles are generated in the fuel inside of the carburetor so that an operation of the engine-driven working machine may become unstable.

In order to control a temperature of the carburetor, a temperature sensor (switch) is generally used. Further, in the Patent Publication 1 below, an electric power supplied to the heater is changed according to a rotational speed of the engine.

### PRIOR ART PUBLICATION

Patent Publication 1: U.S. Patent Application Publication No. 2008/0036429

### SUMMARY OF THE INVENTION

The present invention has an object to provide a handheld engine-driven working machine which can simply achieve temperature control of a handle and a supplying device which supplies fuel and/or air to an engine.

The inventor have made the present invention by paying attention to an issue that the handle should be heated relatively fast, but a temperature of a supplying device which supplies fuel and/or air to an engine and a temperature of a heater for heating the supplying device should not be increased too high.

In order to achieve the above-stated object, a handheld engine-driven working machine according to the present invention has an AC power supply which supplies an AC power, a supplying device which supplies fuel and/or air to an engine, a first path and a second path which are connected to the AC power supply in series and connected to each other in parallel, a handle heater for a handle, the handle heater being located in the first path, a device heater for the supplying device, the device heater being located in the second path, and a controller located in the second path, wherein the controller includes a temperature switch for the supplying device and a half-wave blocking element connected to the device heater in series, and wherein the temperature switch blocks the second path when a temperature of the temperature switch is higher than a predetermined temperature.

In this handheld engine-driven working machine, when a temperature of the temperature switch for the supplying device is equal to or lower than the predetermined temperature, the temperature switch does not block the second path. At that time, the handle heater in the first path is supplied with both of one of the half-waves of the AC power and the other half-wave thereof (namely, full-waves), while the device heater in the second path is supplied with only one of the half-waves of the AC current due to the half-wave blocking element. Thus, compared to when the second path assumes to be supplied with the full-waves, an increasing speed of the temperature of the handle is relatively fast, while an increasing speed of the temperature of the supplying device is relatively slow. Then, when the temperature of the temperature switch becomes higher than the predetermined temperature, the temperature switch blocks the second path. At that time, the handle heater in the first path is supplied with the full-waves of the AC power, while the device heater in the second path is supplied with no power. Thus, the increasing speed of the temperature of the handle becomes faster than before the blocking. On the other hand, since the increasing speed of the temperature of the supplying device is relatively slow before the blocking, the supplying device and the device heater have now the following effects. In the supplying device, after the power supply is cut, since an increasing extent of the temperature of the supplying device due to the remaining heat is small, a difference between the temperature of the supplying device and the predetermined temperature is relatively small. Thus, it is ensured that the temperature of the supplying device is prevented from becoming too high. In the device heater (especially, for example, when the device heater and the temperature switch are located far from each other), there is a difference between the temperature of the device heater and the temperature of the temperature switch. When the device heater continues heating until the temperature of the temperature switch becomes higher than the predetermined temperature, the temperature of the device heater becomes higher than the temperature of the temperature switch. However, since the device heater is supplied with only one of the half-waves, compared to when the full-waves assume to be supplied, a difference between the temperature of the temperature switch and the temperature of the device heater can be reduced, and the device heater can be prevented from being overheated. Then, when the temperature of the temperature switch becomes lower than a predetermined temperature, the temperature switch connects the second path, and the power supply to the device heater is started again. In the engine-driven working machine according to the present invention, since the mere half-wave blocking element and the mere temperature switch are required, it is not necessary to detect a rotational speed of the engine-driven working machine as in the Patent Publication 1. Thus, the temperature control of the handle and the supplying device can be simply achieved.

Further, in order to achieve the above-stated object, a handheld engine-driven working machine according to the present invention has an AC power supply which supplies an AC power, a supplying device which supplies fuel and/or air to an engine, a first path and a second path which are connected to the AC power supply in series and connected to each other in parallel, a handle heater for a handle, the handle heater being located in the first path, a device heater for the supplying device, the device heater being located in the second path, and a controller located in the second path, wherein the controller has a first branch path and a second branch path which are connected to the device heater in series and connected to each other in parallel, wherein the controller further has a first temperature switch for the supplying device, a first half-wave blocking element located in the first branch path so as to be connected to the device heater in series, a second temperature switch for the supplying device, and a second half-wave blocking element located in the second branch path so as to be connected to the device heater in series, wherein the first half-wave blocking element is arranged in a direction so as to pass only one of the half-waves of the AC power, while the second half-wave blocking element is arranged in a direction so as to pass only the other half-wave of the AC power, and wherein the first temperature switch blocks the first branch path when a temperature of the first temperature switch is higher than a first predetermined temperature, while the second temperature switch blocks the second branch path when a temperature of the second temperature switch is higher than a second predetermined temperature, the first predetermined temperature being higher than the second predetermined temperature.

In this engine-driven working machine, when the temperature of the temperature switch for the supplying device is equal to or lower than the second predetermined temperature, the first and second temperature switches do not block the first and second branch paths. At that time, both of the handle heater in the first path and the device heater in the second path are supplied with both of the one of the half-waves of the AC power and the other half-wave thereof (namely, full-waves). Thus, compared to when the second path assumes to be supplied with only one of the half-waves, an increasing speed of the temperature of the handle is relatively slow, while an increasing speed of the temperature of the supplying device is relatively fast, and thus, the temperature of the second temperature switch reaches the second predetermined temperature earlier. Then, when the temperature of the second temperature switch becomes higher than the second predetermined temperature, the second temperature switch blocks the second branch path. At that time, the handle heater is supplied with the full-waves of the AC power, while the device heater in the second path is supplied with only one of the half-waves of the AC current due to the first half-wave blocking element. Thus, the increasing speed of the temperature of the handle becomes faster than before the blocking, while the increasing speed of the temperature of the supplying device becomes slower than before the blocking. Then, when the temperature of the first temperature switch becomes higher than the first predetermined temperature, the first temperature switch blocks the first branch path. At that time, the handle heater in the first path is supplied with the full-waves of the AC power, while the device heater in the second path is supplied with no power. Thus, the increasing speed of the temperature of the handle becomes much faster. In this way, a time period until the supplying device reaches the second predetermined temperature can be shortened (or a time period until the device heater is supplied with only one of the half-waves of the AC power can be shortened) by supplying the device heater with the full-waves, and after that, the increasing speed of the temperature of the handle can become faster. On the other hand, since the increasing speed of the temperature of the supplying device is relatively slow when the first temperature switch for the supplying device reaches the first predetermined temperature, the supplying device and the device heater have now the following effects. In the supplying device, after the power supply is cut, since an increasing extent of the temperature of the supplying device due to the remaining heat is small, a difference between the temperature of the supplying device and the first predetermined temperature is relatively small. Thus, it is ensured that the temperature of the supplying device is prevented from becoming too high. In the device heater (especially, for example, when the device heater and the first temperature switch are located far from each other), there is a difference between the temperature of the device heater and the temperature of the first temperature switch. When the device heater continues heating until the temperature of the first temperature switch becomes higher than the predetermined temperature, the temperature of the device heater becomes higher than the temperature of the first temperature switch. However, since the device heater is supplied with only one of the half-waves, a difference between the temperature of the first temperature switch and the temperature of the device heater can be reduced, and the device heater can be prevented from being overheated. Then, when the temperature of the first temperature switch becomes lower than the first predetermined temperature, the first temperature switch connects the first branch path, and the power supply to the device heater only by one of the half-waves is started again. In the engine-driven working machine according to the present invention, since the mere two half-wave blocking elements and the mere two temperature switches are required, it is not necessary to detect a rotational speed of the engine-driven working machine as in the Patent Publication 1. Thus, the temperature control of the handle and the supplying device can be simply achieved.

In an embodiment of the engine-driven working machine according to the present invention, preferably, the device heater is made in a film-like configuration and attached to the supplying device.

In this engine-driven working machine, by arranging the heater in the film-like configuration on a side surface of the supplying device, a good layout can be ensured. Further, since the device heater is supplied with only one of the half-waves, the device heater is prevented from being overheated, and thus, although the heater is in the film-like configuration, it is unlikely damaged due to overheat.

Further, in an embodiment of the engine-driven working machine according to the present invention, the engine-driven working machine may have a manual switch of blocking the first path, or a temperature switch for the handle which blocks the first path.

In this engine-driven working machine, when the manual switch is employed, the operator can voluntary turn ON/OFF the manual switch so that the handle has an appropriate temperature. Even if the engine-driven working machine is started while the manual switch is turned OFF, the device heater is unlikely damaged due to overheat, because the device heater is supplied with only one of the half-waves. Further, when the automatic (temperature) switch is employed, the handle can have automatically an appropriate temperature. Namely, the handle and the handle heater are abnormally prevented from being overheated.

### BRIEF DESCRIPTION OF THE DRAWINGS

Fig. 1 is a perspective view of a chain saw.
Fig. 2 is a cross-sectional view of the chain saw.
Fig. 3 is a front view of the chain saw with a portion thereof removed.
Fig. 4 is a circuit diagram for a handle heater and a carburetor heater of the chain saw, which is a first embodiment of the present invention.
Fig. 5 is a graph indicating a change in a temperature of a carburetor with respect to time.
Fig. 6 is a view showing the carburetor heater and a substrate located at the carburetor.
Fig. 7 is a circuit diagram for the handle heater and the carburetor heater of the chain saw, which is a second embodiment of the present invention.

### DETAILED DESCRIPTION OF EMBODIMENTS

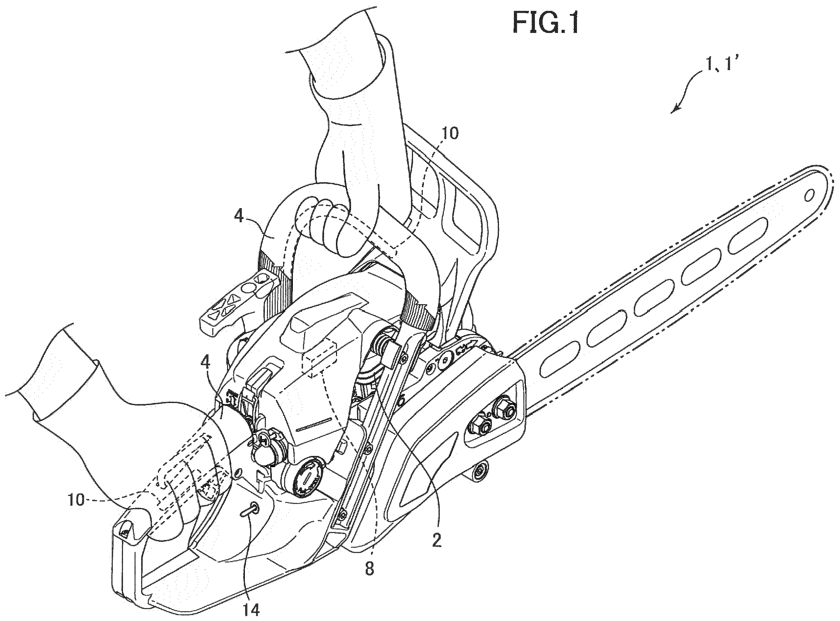

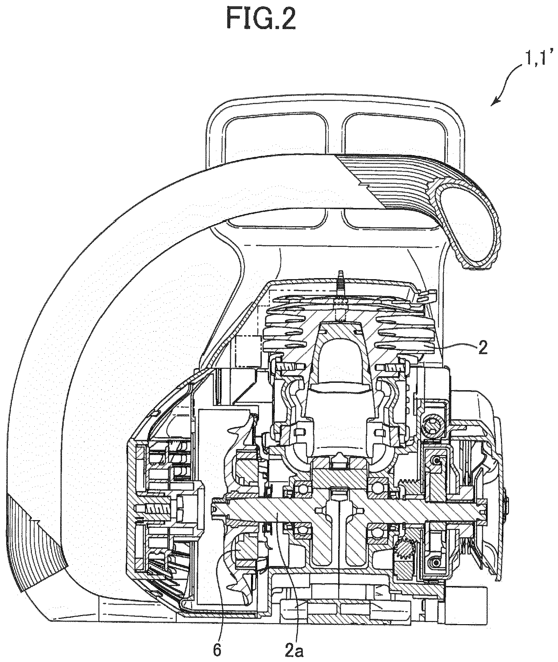

Referring to the figures, a first embodiment of a chain saw which is a handheld engine-driven working machine according to the present invention will be explained. As shown in Figs. 1 and 2, a chain saw 1 has an internal combustion engine 2 and handles 4. The internal combustion engine 2 is, for example, a two-stroke gasoline engine. In the illustrated embodiment, two handles 4 are provided in an upper portion and a rear portion of the chain saw 1. The internal combustion engine 2 also has a crankshaft 2a to which an electrical generator 6 is attached, and the electrical generator 6 functions as an AC power supply which supplies an AC power.

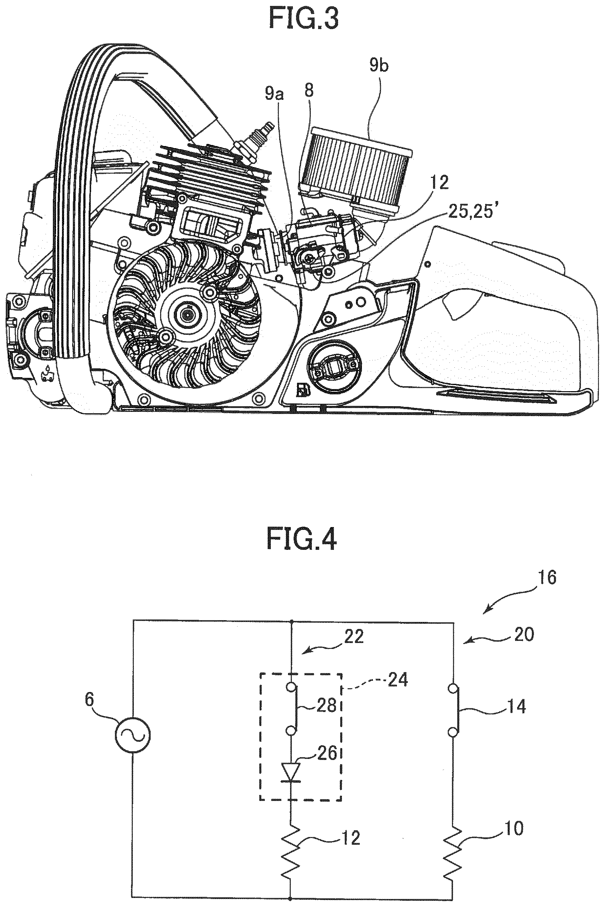

Further, as shown in Fig. 3, the internal combustion engine 2 has a carburetor 8, an intake port 9a which communicates with the carburetor 8 for combusting air-fuel mixture generated in the carburetor 8, and an air cleaner 9b which removes foreign objects from atmosphere, and the carburetor 8 is provided between the intake port 9a and the air cleaner 9b.

The handles 4 are provided with a handle heater 10, while the carburetor 8 is provided with a carburetor heater 12. The handle heater 10 and the carburetor heater 12 are, for example, resistive heaters. The carburetor heater 12 is preferably made in a film-like configuration. In the illustrated embodiment, each handle 4 is preferably provided with its handle heater 10.

Further, a switch 14 is provided for turning ON/OFF the handle heater 10. Since a setting of a temperature of the handle 4 may be changed according to an operative condition of an operator, such as a thickness of gloves worn by the operator, the switch 14 is, for example, a manual switch.

Fig. 4 shows a circuit 16 for the handle heater 10 and the carburetor heater 12. As shown in Fig. 4, the circuit 16 includes a first path 20 and a second path 22 which are connected to the electrical generator 6 in series and connected to each other in parallel. The handle heater 10 is located in the first path 20. The carburetor heater 12 is located in the second path 22. The switch 14 can block the first path 20, and in the illustrated embodiment, is located in the first path 20 and connected to the handle heater 10 in series.

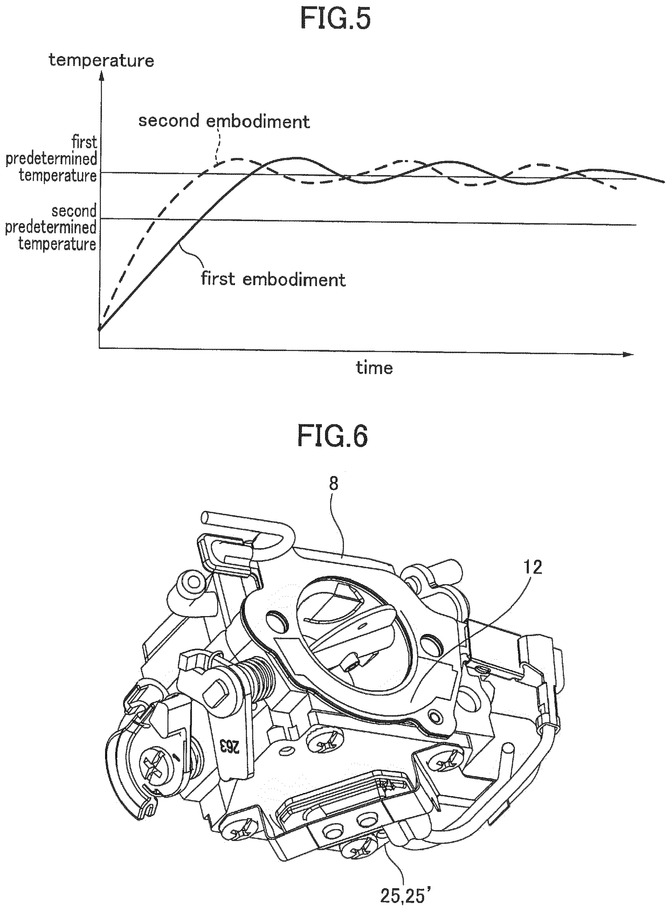

A controller 24 is located in the second path 22. The controller 24 consists of a single diode 26 and a single temperature switch 28 for the carburetor 8, which are connected to the carburetor heater 12 in series. The controller 24 is preferably provided on a single flat substrate 25, taking into consideration a layout including the engine-driven working machine 1 and the carburetor 8 or cost reduction (see Fig. 6). The temperature switch 28 is, for example, a bimetallic temperature switch (which includes a bi-metal of shape-memory alloy and can turn ON/OFF at a predetermined temperature), and can block the second path 22 when the temperature of the switch 28 is higher than a predetermined temperature. The predetermined temperature, namely, a temperature at which the switch 28 starts blocking the second path 22, is preferably set so that a carburation efficiency of atomized fuel is not degraded and moisture in intake air or fuel is not frozen, and, for example, set to 6-10 °C. The predetermined temperature is also set so that the temperature of the handle does not decrease, while bubbles are prevented from being generated in the fuel in the carburetor 8 by increasing the temperature of the carburetor 8 more than necessary.

Next, an operation of the handle heater 10 and the carburetor heater 12 in the chain saw 1 will be explained.

An example of a change in a temperature of the carburetor 8 with respect to time is briefly shown in Fig. 5 by a solid line. When the switch 14 is ON and the temperature of the temperature switch 28 is equal to or lower than the predetermined temperature, the temperature switch 28 does not block the second path 22. At that time, the handle heater 10 in the first path 20 is supplied with both of one of the half-waves of the AC power and the other half-wave thereof (namely, full-waves), while the carburetor heater 12 in the second path 22 is supplied with only one of the half-waves of the AC current due to the diode 26. Thus, compared to when the second path 22 assumes to be supplied with the full-waves, an increasing speed of the temperature of the handle 4 is relatively fast, while an increasing speed of the temperature of the carburetor 8 is relatively slow.

Then, when the temperature of the temperature switch 28 becomes higher than the predetermined temperature, the temperature switch 28 blocks the second path 22. At that time, the handle heater 10 in the first path 20 is supplied with the full-waves of the AC power, while the carburetor heater 12 in the second path 22 is supplied with no power. Thus, the increasing speed of the temperature of the handle 4 becomes faster than before the blocking. On the other hand, since the increasing speed of the temperature of the carburetor 8 is relatively slow before the blocking, the carburetor 8 and the carburetor heater 12 have now the following effects. In the carburetor 8, after the power supply is cut, since an increasing extent of the temperature of the carburetor 8 due to the remaining heat is small, a difference between the temperature of the carburetor 8 and the predetermined temperature is relatively small. Thus, it is ensured that the temperature of the carburetor 8 is prevented from becoming too high. In the carburetor heater 12 (especially, for example, when the carburetor heater 12 and the temperature switch 28 are located far from each other), there is a difference between the temperature of the carburetor heater 12 and the temperature of the temperature switch 28. When the carburetor heater 12 continues heating until the temperature of the temperature switch 28 becomes higher than the predetermined temperature, the temperature of the carburetor heater 12 becomes higher than the temperature of the temperature switch 28. However, since the carburetor heater 12 is supplied with only one of the half-waves, a difference between the temperature of the temperature switch 28 and the temperature of the carburetor heater 12 can be reduced, and the carburetor heater 12 can be prevented from being overheated.

Then, when the temperature of the temperature switch 28 becomes lower than the predetermined temperature, the temperature switch 28 connects the second path 22, and the power supply to the carburetor heater 12 only by one of the half-waves is started again.

When an operator of the engine-driven working machine 1 determines that the temperature of the handle 4 has been sufficiently increased, the switch 14 can be turned OFF.

In this chain saw 1, as explained above, the AC power generated by the electrical generator 6 can be efficiently utilized to increase the temperature of the handle 4, because the power which is not supplied to the carburetor heater 12 is always supplied to the handle heater 10. Further, since the mere single diode 26 and the mere single temperature switch 28 are required, it is not necessary to detect a rotational speed of the engine-driven working machine 1 as in the Patent Publication 1. Thus, the temperature control of the handle 4 and the carburetor 8 can be simply achieved.

As shown in Figs. 3 and 6, it is preferable that the substrate 25 including the controller 24 is provided on a side surface of the carburetor 8, while the carburetor heater 12 in the film-like configuration is provided on another side surface (a connecting surface facing toward the air cleaner 9b) of the carburetor 8. Thus, an unoccupied space between the carburetor 8 and the other parts provided in the engine-driven working machine 1 can be effectively utilized.

Next, a second embodiment of a chain saw which is a handheld engine-driven working machine according to the present invention will be explained. A chain saw 1' of the second embodiment is the same as the chain saw 1 of the first embodiment except for the controller 24.

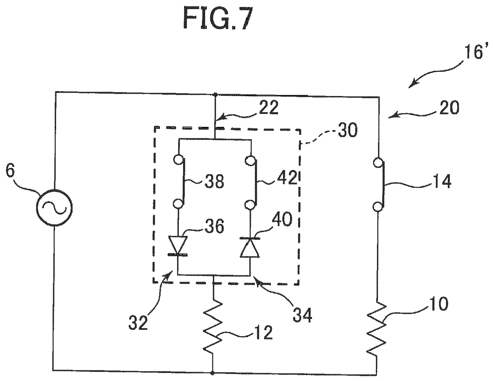

Fig. 7 shows a circuit 16' for the handle heater 10 and the carburetor heater 12. As shown in Fig. 7, the circuit 16' includes a first path 20 and a second path 22 which are connected to the electrical generator 6 in series and connected to each other in parallel, as in the first embodiment. The handle heater 10 is located in the first path 20. The carburetor heater 12 is located in the second path 22. The switch 14 is located in the first path 20 and connected to the handle heater 10 in series.

A controller 30 is located in the second path 22. The controller 30 includes a first branch path 32 and a second branch path 34 which are connected to the carburetor heater 12 in series and connected to each other in parallel. The controller 30 further includes a first diode 36 and a first temperature switch 38 for the carburetor 8 which are located in the first branch path 32 and connected to each other in series, and a second diode 40 and a second temperature switch 42 for the carburetor 8 which are located in the second branch path 34 and connected to each other in series. The first diode 36 is arranged in a direction so as to pass only one of the half-waves of the AC power, while the second diode 40 is arranged in a direction so as to pass only the other half-wave of the AC power. The controller 30 is preferably provided on a single substrate 25', taking into consideration a layout including the engine-driven working machine 1' and the carburetor 8 or cost reduction.

The first temperature switch 38 is, for example, a bimetallic temperature switch (which includes a bi-metal of shape-memory alloy and can turn ON/OFF at a predetermined temperature), and can block the first branch path 32 when the temperature of the switch 38 is higher than a first predetermined temperature. The first predetermined temperature, namely, a temperature at which the switch 38 starts blocking the first branch path 32, is preferably set so that a carburation efficiency of atomized fuel is not degraded and moisture in intake air or fuel is not frozen, and, for example, set to 6-10 °C. The first predetermined temperature is also set so that the temperature of the handle does not decrease, while bubbles are prevented from being generated in the fuel in the carburetor 8 by increasing the temperature of the carburetor 8 more than necessary.

The second temperature switch 42 is, for example, a bimetallic temperature switch (which includes a bi-metal of shape-memory alloy and can turn ON/OFF at a predetermined temperature), and can block the second branch path 34 when the temperature of the switch 42 is higher than a second predetermined temperature. The second predetermined temperature, namely, a temperature at which the switch 42 starts blocking the second branch path 34, is preferably set to a temperature which is lower than the above-stated first predetermined temperature by a couple of degrees, and, for example, set to 0-5 °C, wherein the above-stated first predetermined temperature is set so that the carburation efficiency of the atomized fuel being not degraded and the moisture in the intake air or fuel is not frozen.

Next, an operation of the handle heater 10 and the carburetor heater 12 in the chain saw 1' will be explained.

An example of a change in the temperature of the carburetor 8 with respect to time is briefly shown in Fig. 5 by a broken line. When the switch 14 is ON and the temperature of the second temperature switch 42 for the supplying device 8 is equal to or lower than the second predetermined temperature, the first temperature switch 38 and the second temperature switch 42 do not block the first branch path 32 and the second branch path 34, respectively. At that time, both of the handle heater 10 in the first path 20 and the carburetor heater 12 in the second path 22 are supplied with both of the one of the half-waves of the AC power and the other half-wave thereof (namely, full-waves). Thus, compared to when the second path 22 assumes to be supplied with only one of the half-waves (as in the first embodiment), an increasing speed of the temperature of the handle 4 is relatively slow, while an increasing speed of the temperature of the carburetor 8 is relatively fast. The reason why the increasing speed of the temperature of the handle 4 is relatively slow is that the power is consumed more by the carburetor 8 (in the second path 22).

Then, when the temperature of the second temperature switch 42 becomes higher than the second predetermined temperature, the second temperature switch 42 blocks the second branch path 34. At that time, the handle heater 10 in the first path 20 is supplied with the full-waves of the AC power, while the carburetor heater 12 in the second path 22 is supplied with only one of the half-waves of the AC current due to the first diode 36. Thus, the increasing speed of the temperature of the handle 4 becomes faster than before the blocking, while the increasing speed of the temperature of the carburetor 8 becomes slower than before the blocking.

Then, when the temperature of the first temperature switch 38 becomes higher than the first predetermined temperature, the first temperature switch 38 blocks the first branch path 32. At that time, the handle heater 10 in the first path 20 is supplied with the full-waves of the AC power, while the carburetor heater 12 in the second path 22 is supplied with no power. Thus, the increasing speed of the temperature of the handle 4 becomes much faster. In this way, a time period until the carburetor 8 reaches the second predetermined temperature can be shortened (or a time period until the carburetor heater 12 is supplied with only one of the half-waves of the AC power can be shortened) by supplying the carburetor heater 12 with the full-waves, and after that, the increasing speed of the temperature of the handle 4 can become faster. On the other hand, since the increasing speed of the temperature of the carburetor 8 is relatively slow when the first temperature switch 38 for the carburetor 8 reaches the first predetermined temperature, the carburetor 8 and the carburetor heater 12 have now the following effects. In the carburetor 8, after the power supply is cut, since an increasing extent of the temperature of the carburetor 8 due to the remaining heat is small, a difference between the temperature of the carburetor 8 and the first predetermined temperature is relatively small. Thus, it is ensured that the temperature of the carburetor 8 is prevented from becoming too high. In the carburetor heater 12 (especially, for example, when the carburetor heater 12 and the first temperature switch 38 are located far from each other), there is a difference between the temperature of the carburetor heater 12 and the temperature of the first temperature switch 38. When the carburetor heater 12 continues heating until the temperature of the first temperature switch 38 becomes higher than the first predetermined temperature, the temperature of the carburetor heater 12 becomes higher than the temperature of the first temperature switch 38. However, since the carburetor heater 12 is supplied with only one of the half-waves, a difference between the temperature of the first temperature switch 38 and the temperature of the carburetor heater 12 can be reduced, and the carburetor heater 12 can be prevented from being overheated.

Then, when the temperature of the first temperature switch 38 becomes lower than the first predetermined temperature, the first temperature switch 38 connects the first branch path 32, and the power supply to the carburetor heater 12 only by one of the half-waves is started again.

When an operator of the engine-driven working machine 1' determines that the temperature of the handle 4 has been sufficiently increased, the switch 14 can be turned OFF.

In this engine-driven working machine 1', as explained above, the AC power generated by the electrical generator 6 can be efficiently utilized to increase the temperature of the handle 4, because the power which is not supplied to the carburetor heater 12 is always supplied to the handle heater 10. Further, since the mere two diodes 36, 40 and the mere two temperature switches 38, 42 are required, it is not necessary to detect a rotational speed of the engine-driven working machine 1' as in the Patent Publication 1. Thus, the temperature control of the handle 4 and the carburetor 8 can be simply achieved.

In the second embodiment, the carburetor 8 can increase its temperature faster so as to reach the second predetermined temperature earlier than in the first embodiment, because the full-waves of the AC power are supplied to the carburetor heater 12 during the temperature thereof is lower than the second predetermined temperature.

As shown in Figs. 3 and 6, it is preferable that the substrate 25' including the controller 30 is provided on a side surface of the carburetor 8, while the carburetor heater 12 in the film-like configuration is provided on another side surface (a connecting surface facing toward the air cleaner 9b) of the carburetor 8. Thus, an unoccupied space between the carburetor 8 and the other parts provided in the engine-driven working machine 1' can be effectively utilized.

Although the embodiments of the present invention have been explained, the present invention is not limited to the embodiments, namely, many kinds of modifications can be done within the scope of the present invention, and it goes without saying that such modifications fall within the scope of the present invention.

In the above-stated embodiments, although the switch 14 is a manual switch, it may be a temperature switch for the handle 4. The temperature switch for the handle 4 is, for example, a bi-metal temperature switch (which includes a bi-metal of shape-memory alloy and can turn ON/OFF at a predetermined temperature), and can block the first path 20 when a temperature of the temperature switch for the heater 4 is higher than the predetermined temperature. In this case, when the temperature of the handle 4 becomes higher than the predetermined temperature, the AC power supply to the handle heater 10 is cut so that the increase of the temperature of the handle 4 can be automatically stopped, and when the temperature of the handle 4 becomes equal to or lower than the predetermined temperature, the power supply is started again.

The carburetor 8 in the above-stated embodiments is an example of a supplying device which supplies fuel and/or air to the engine. Thus, the supplying device in the present invention is not limited to the carburetor 8 and may be a device of adjusting an amount of fuel supply, a device of adjusting an amount of air supply, and so on.

The diodes 26, 36, 40 in the above-stated embodiments are examples of a half-wave blocking element which blocks one of the half-waves of an AC. Thus, the half-wave blocking element in the present invention is not limited to the diode, and may be a thyristor or another element. In this case, the circuits for the first path 20, the first branch path 32, and the second branch path 34 can be changed accordingly. When a thyristor is used, since the thyristor has a switching function, a circuit achieving both a switch and a half-wave control may be created by using a thermistor which resister value changes according to a temperature in order to control a gate current of the thyristor according to the temperature.

## Claims

1. A handheld engine-driven working machine (1) comprising:
an AC power supply (6) which supplies an AC power,
a supplying device (8) which supplies fuel and/or air to an engine (2),
a first path (20) and a second path (22) which are connected to the AC power supply (6) in series and connected to each other in parallel,
a handle heater (10) for a handle (4), the handle heater (10) being located in the first path (20),
a device heater (12) for the supplying device (8), the device heater (12) being located in the second path (22), and
a controller (24) located in the second path (22),
wherein the controller (24) includes a temperature switch (28) for the supplying device (8), and a half-wave blocking element (26) connected to the device heater (12) in series, and
wherein the temperature switch (28) blocks the second path (22) when a temperature of the temperature switch (28) is higher than a predetermined temperature.

2. The engine-driven working machine (1) according to claim 1, wherein the device heater (12) is made in a film-like configuration and attached to the supplying device (8).

3. The engine-driven working machine (1) according to claim 1 or 2, further comprising a switch (14) for blocking the first path (20), which is a manual switch.

4. The engine-driven working machine (1) according to claim 1 or 2, further comprising a switch (14) for blocking the first path (20), which is a temperature switch for the handle (4).

5. A handheld engine-driven working machine (1') comprising:
an AC power supply (6) which supplies an AC power,
a supplying device (8) which supplies fuel and/or air to an engine (2),
a first path (20) and a second path (22) which are connected to the AC power supply (6) in series and connected to each other in parallel,
a handle heater (10) for a handle (4), the handle heater (10) being located in the first path (20),
a device heater (12) for the supplying device (8), the device heater (12) being located in the second path (22), and
a controller (24) located in the second path (22),
wherein the controller (30) has a first branch path (32) and a second branch path (34) which are connected to the device heater (12) in series and connected to each other in parallel,
wherein the controller (30) further has a first temperature switch (38) for the supplying device (8), a first half-wave blocking element (36) located in the first branch path (32) so as to be connected to the device heater (12) in series, a second temperature switch (42) for the supplying device (8), and a second half-wave blocking element (40) located in the second branch path (34) so as to be connected to the device heater (12) in series,
wherein the first half-wave blocking element (36) is arranged in a direction so as to pass only one of the half-waves of the AC power, while the second half-wave blocking element (40) is arranged in a direction so as to pass only the other half-wave of the AC power, and
wherein the first temperature switch (38) blocks the first branch path (32) when a temperature of the first temperature switch (38) is higher than a first predetermined temperature, while the second temperature switch (42) blocks the second branch path (34) when a temperature of the second temperature switch (42) is higher than a second predetermined temperature, the first predetermined temperature being higher than the second predetermined temperature.

6. The engine-driven working machine (1') according to claim 5, wherein the device heater (12) is made in a film-like configuration and attached to the supplying device (8).

7. The engine-driven working machine (1') according to claim 5 or 6, further comprising a switch (14) for blocking the first path (20), which is a manual switch.

8. The engine-driven working machine (1') according to claim 5 or 6, further comprising a switch (14) for blocking the first path (20), which is a temperature switch for the handle (4).
